# EUROPEAN PATENT SPECIFICATION

(11) **EP 3 445 009 B1**
(45) Date of publication and mention of the grant of the patent: **23.09.2020**
(21) Application number: 17306075.7
(22) Date of filing: 17.08.2017
(51) Int. Cl.: H04L 12/751, H04L 12/24, H04L 29/08

(54) **SELECTION OF NETWORK ROUTING TOPOLOGY**
AUSWAHL DER NETZWERKLEITWEGLENKUNGSTOPOLOGIE
SÉLECTION DE TOPOLOGIE DE ROUTAGE DE RÉSEAU

(43) Date of publication of application: 20.02.2019
(73) Proprietor: Nokia Solutions and Networks Oy, 02610 Espoo (FI)
(72) Inventor: Roennow, Troels, Cambirdge, Cambridgeshire CB2 9BG (GB); Palyutina, Karina, Cambridge, Cambridgeshire CB4 2AW (GB); López, Enrique, Cambridge, Cambridgeshire CB4 3DN (GB); Li, Hongwei, Cambridge, Cambridgeshire CB4 1RY (GB); Bitauld, David, Cambridge, Cambridgeshire CB5 8DR (GB)
(74) Representative: Bryers LLP

(56) References cited:
- US-A1- 2005 174 950
- US-A1- 2009 190 496

## Description

### TECHNICAL FIELD

The disclosure relates to the selection of network routing topology in order to optimise network traffic routing in a distributed network, such as a peer-to-peer (P2P) network.

### BACKGROUND

In a distributed network, such as a peer-to-peer (P2P) network for example, multiple nodes can be interconnected with one another and data can be passed between nodes to enable file sharing for example. In such networks, a distributed application architecture can exist that can partition tasks or workloads between peers, where a P2P network can be designed around equal peer nodes simultaneously functioning both as "clients" and "servers". Peers can be equally privileged, equipotent participants in the application.

For cryptocurrencies, for example Bitcoin, decentralization of control is a design principle and can be achieved and maintained using a flat, decentralized P2P consensus network. Connectivities in decentralized P2P networks can be optimised using a local approximation in which each node optimises its own connectivity based on the current network topology that each node knows. The local approximation approach may therefore become sub-optimal and no longer lead to efficient routing as the network grows and, in some cases, it may even defragment the network.

US 2005/0174950 A1 discloses distributed network organisation and topology discovery in an ad-hoc network, in which each node analyses a network topology table to determine a most suitable node to act as a central co-ordinator node (CCo) in the network. If a node decides that it is the CCo it transmits a message to the other nodes, but if the node determines that it is not suitable for the CCo then it remains silent and monitors a channel for the message from the CCo chosen node.

US 2009/0190496 A1 relates to a method for organising nodes of an ad-hoc network into clusters. A weighting is given to each node representing its aptness to be the master node of a grouping. The node compares the weightings of itself and adjacent nodes to determine the node having the highest weighting to be chosen as the master node for that cluster.

### SUMMARY

In a first aspect there is provided a method for selecting a network routing topology in a distributed network comprising multiple nodes, the method comprising, at respective ones of the multiple nodes receiving candidate transactions, supplementing a database with the candidate transaction data, selecting a network routing topology, and the candidate transactions representing a set of candidate network routing topologies, receiving respective voting transactions from each of the other nodes, each representing an indication of a preferred candidate network routing topology, and selecting the network routing topology from the set of candidate network routing topologies on the basis of the voting transactions.

The method may further comprise generating a voting transaction referencing a candidate transaction proposing a candidate network routing topology.

The method may further comprise deploying the selected network routing topology for a predetermined period of time, or until a threshold value for a number of network changes is reached.

A candidate network routing topology may comprise a routing table generated using one or more predefined routing criteria.

The method may further comprise rewarding delivery of messages on the network which are compliant with the selected network topology.

The multiple nodes may be a subset of a larger number of network nodes, the remainder of which are configured to deploy a selected network routing topology.

The database may be a distributed database.

In a second aspect there is provided a distributed network comprising multiple nodes configured to receive candidate transactions, supplement a database with the candidate transaction data, select a network routing topology, and the candidate transactions representing a set of candidate network routing topologies, receive respective voting transactions from each of the other nodes, each representing an indication of a preferred candidate network routing topology, and select the network routing topology from the set of candidate network routing topologies on the basis of the voting transactions.

In a third aspect there is provided a node in a distributed network, the node configured to receive candidate transactions, supplement a database with the candidate transaction data, select a network routing topology, and the candidate transactions representing a set of candidate network routing topologies, receive respective voting transactions from multiple other nodes, each representing an indication of a preferred candidate network routing topology, and select the network routing topology from the set of candidate network routing topologies on the basis of the voting transactions.

The node may be configured to generate a voting transaction referencing a candidate transaction proposing a candidate network routing topology.

In a fourth aspect there is provided a machine-readable storage medium encoded with instructions for selecting a network routing topology in a distributed network comprising multiple nodes, the instructions executable by a processor of a node to cause the node to receive candidate transactions, supplement a database with the candidate transaction data, select a network routing topology, and the candidate transactions representing a set of candidate network routing topologies, receive respective voting transactions from multiple other nodes, each representing an indication of a preferred candidate network routing topology, and select the network routing topology from the set of candidate network routing topologies on the basis of the voting transactions.

### BRIEF DESCRIPTION OF THE DRAWINGS

Embodiments will now be described, by way of example only, with reference to the accompanying drawings, in which:
Figure 1 is a flow diagram showing the process of selection of a network topology according to an example;
Figure 2 is a schematic showing how network topology solutions are proposed by nodes and a new network topology block is formed according to an example; and
Figure 3 is a flow diagram showing a process of selection of a winning network topology solution if two solutions have the same number of votes by the nodes according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

The present disclosure relates to the selection of a network routing topology, in order to optimise network traffic routing in a distributed network. An example of a distributed network is a peer-to-peer (P2P) network. P2P networks are widely used for distributed file sharing networks and digital cryptocurrencies.

In general, P2P networking (or P2P computing) relates to a distributed application architecture that partitions tasks or workloads between peers. A P2P network is an example of a common protocol for a mesh network; it can be part of a physical network configuration, or virtually overlaid over physical network.

According to an example, a blockchain-based network optimisation method is described in which nodes can vote to optimise network topology in order to make network traffic routing more efficient. A network routing solution according to an example can use a blockchain system, where each blockchain node can be part of a blockchain P2P network. The network may have one or more blockchains built into it and may also maintain a global routing table that may or may not include transfer rates, ping times and so on.

Depending on how nodes use the network, each node can have interest in optimising the network in a different way, where the interest of one node may conflict with the interests of other nodes.

In an example, each node can propose a topology for the whole network routing solution and the node can submit the proposal to be considered for deployment at the next block on the blockchain. Every participating node can then be given a number of votes (for example one or more) in which to vote for the proposed solutions. The network routing solution that receives the most votes can then be recorded in the next block of the blockchain and deployed to the whole network.

In an example, protocols can include: proposing a solution and voting, voting, resolving two or more "winning" solutions, and deployment of the next topology. The resolved winning solution can be the selected network topology that is entered into the next block of the blockchain.

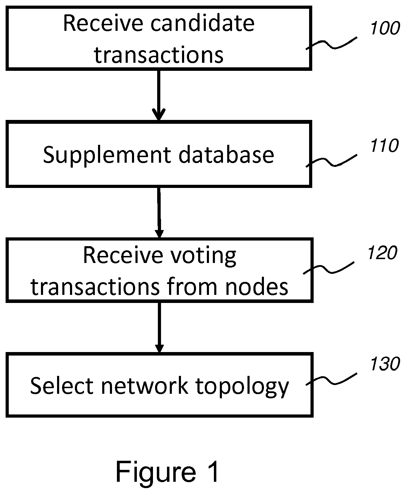

Figure 1 shows a flow diagram of the process of selection of a network topology according to an example. At block 100 candidate transactions representing a set of candidate network routing topologies are received. At block 110a database with the candidate transaction data is supplemented. For example, the database may be stored at a particular node at one physical location. Alternatively, the database may be a distributed database in which multiple nodes store portions of or complete copies of the database. That is, for example, some or all candidate transaction data or copies of some or all candidate transaction data can be stored across multiple physical locations. At block 120 respective voting transactions from each of the other nodes are received, each representing an indication of a preferred candidate network routing topology. At block 130 a network routing topology is selected from the set of candidate network routing topologies on the basis of the voting transactions.

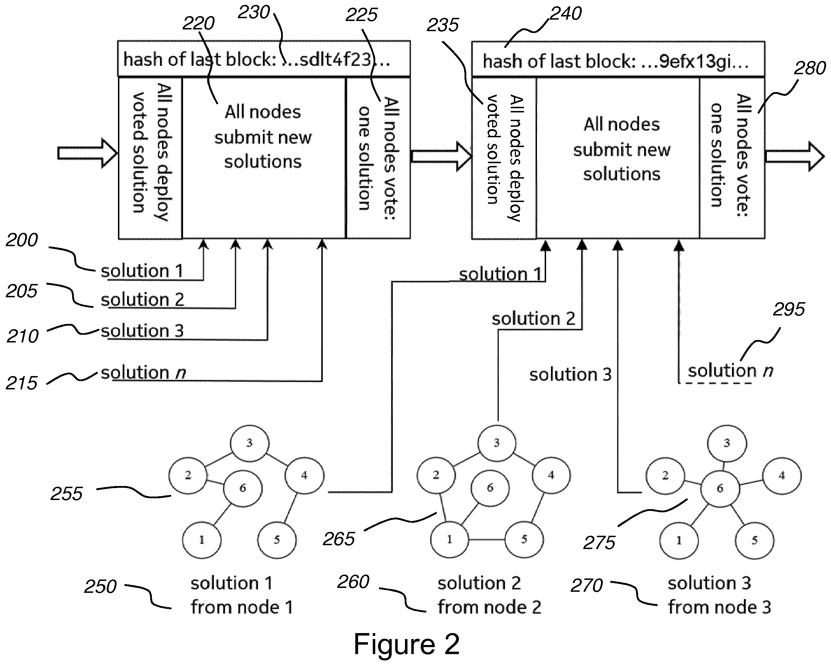

Figure 2 shows how an optimised network topology is obtained according to an example. Network topology solutions 200, 205, 210, 215 are proposed by the nodes in the network. The proposed solutions are submitted 220 and the nodes vote on the proposed solutions 225. A previous block of the blockchain 230 may be referenced and incorporated in the voting decisions. The winning network topology is selected to form a new network topology block 235. The winning network topology block is deployed by some or all of the nodes. After a set time has elapsed (for example) a new block of the blockchain can be generated by a further proposal and voting round 240 from the nodes. Different nodes 250, 260, 270 can propose different connection solutions 255, 265, 275. Based on the results of the voting 280, only one network topology solution wins (i.e. is selected) to generate the next block of the blockchain. As nodes join and leave the network over time, new nodes joining the network are also able to propose a solution 295.

In an example, a single node may not be able to see every other participating node, and the single node's proposed solution to the network topology will be generally local, i.e. the proposal may include only the connectivity of the other participating nodes that the single node can see.

In an example, the proposed network topology solutions provided by each node, and to be voted upon, can be based on a previous global topology of the network. The connectivity of the previous global topology of the network can be modified based on the nodes that each node sees (and hence has been able to optimise locally). In this example, the selected proposal can provide a globally accepted network topology.

In an example, the issue of "local vs global" solutions can be resolved using ongoing voting results, in which each node takes a number (e.g. five) of the most voted (global) solutions that it can see, and performs its local optimisation based on the most voted (global) solutions, in order to propose a best result as its own solution.

In an example, votes can be submitted in parallel with network topology proposals.

A node may not necessarily have to wait for the next block in the blockchain to be mined, since nodes can cast their respective votes (in real-time) as they hear network topology proposals being submitted. In an example, one way to issue a voting transaction is by referencing a transaction that proposed the preferred topology, such that a node may be disallowed from voting for their own proposed topology.

The voting mechanism may consist of each node ranking a top number of solutions (e.g. top three solutions). For example, a node that first sees a topology that suits its own needs can vote for it by assigning a number. If that node then votes for another solution that is better suited it can assign a higher number than the first topology, i.e. the primary most favourable vote would have a lowest number, the second most favourable choice with the second lowest number, and so on. Whilst assessing the different proposed network topologies, a node may invalidate any vote that contains the same ranking number for different solutions so as to ensure a strict deterministic method to resolve which solution is ultimately voted for by the node. Whilst this is just one example of a voting method, it will be appreciated that other voting methods may also be possible and any custom voting mechanism can be used instead.

If two (or more) solutions receive an equal number of votes, the winning solution may be selected by ledger heuristics. In an example, this can be achieved as follows:
1) Use a predetermined number of bits from a hash of previous block as a random seed (for example between position 10 and 20), to use for pseudorandom number generation;
2) At each node, execute pseudorandom number generation with the same seed to generate a number between 0 and 1;
3) If the result is less than 0.5, solution 1 can be selected, otherwise solution 2 can be selected.

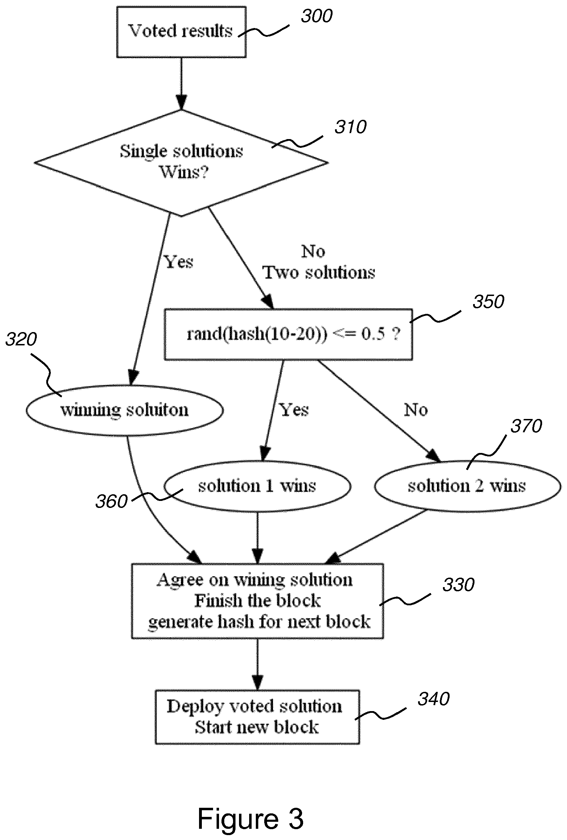

Figure 3 shows an example of how the optimisation process works when selecting a winning solution if two solutions receive the same number of votes according to an example. Block 300 represents the results of the voting. At block 310 it is determined if a single solution wins. If a single solution wins 320 a hash is generated 330 for the next block of the blockchain. The winning solution based on the voting results from the nodes is deployed 340 and a new block of the blockchain is started. If a single solution does not win then a determination of the ultimate winning solution is performed 350, for example using a heuristic algorithm. In the example shown in Figure 3 there are two possible solutions 360, 370 that can win, however in other examples this may be extended to more than two possible solutions. As such, this method can be extended to multiple solutions that all receive the same number of votes. Once a winning solution is agreed upon 330 based on the outcome of the winning solution determination, the hash for the next block is generated and the voted solution is deployed 340 and a new block started.

Once a new solution is selected and deployed in the network, all nodes use the same solution before another block is generated in the blockchain.

Since there are nodes joining and leaving the network from time to time, new blocks for an updated network routing solution will be required. The time interval for new block generation can be predefined or can depend on changes (or a rate of change) of the network nodes and their connection status. For example, this may include numbers of joining/leaving nodes, connection delays, interruptions, etc.. Each node can then generate a new routing solution based on a previous solution and incorporate changes around itself when submitting another new vote.

In an example, the network routing topology can be deployed immediately in the next block of the blockchain. Alternatively, the network routing topology can be deployed after a set number of blocks in the blockchain, to ensure that the probability of the block belonging to a fork of the chain is very low.

In an example, node can deploy a heuristic algorithm to find semi-optimal routing tables. As an example, routing criteria can include a message that is passed to the network being treated such that every node sees the message exactly once and only passes it on to one other neighbour. In order to optimise for the total time the message needs to traverse the network a heuristic algorithm can be applied. An example heuristic algorithm that could be applied may be simulated annealing. The result would be that every node would end up producing their own unique suggestion of what the routing table should look like (at least if the parameters in the problem are non-trivial). To then decide which solution to vote for, each node may then evaluate the associated cost function to determine which solution it considers better, e.g. a measure of "good" can be determined by a cost function that is a function for which the lowest possible value is archived as a function of proposed solution. Different cost functions can be defined for a given routing table to assess the how well a proposed solution performs. Example cost functions can include an average shortest path between nodes or a best/worst case time. In another example, the nodes may deploy a "selfish" algorithm (such as Dijkstra's algorithm) to favour fast messages passing from itself to any other node.

To encourage the enforcement of the winning network topology, the system may, in an example, reward delivery of messages on the network which are compliant with the winning network topology. In another example, nodes that consequently refuse to comply with the winning network topology may be penalised or even excluded from the network.

In an example, especially in a case of a very large number of nodes in the network, it might be impractical for all nodes to maintain and optimise the routing solution for the whole network. In this case, the nodes can be divided into two groups: normal nodes and light nodes. Normal nodes may run an optimisation algorithm and take part in solution voting for the next block, whilst light nodes may just download the routing solution.

In another example, the routing protocol can be deployed over the underlying physical network itself to optimise internet connectivity. This can be solved by each routing node running a blockchain based protocol as described above.

The selection methods described herein allow the possibility of global state optimisation using heuristic algorithms. The voting mechanism improves routing efficiency and makes sure to avoid network fragmentation, round routing etc..

Thus, according to an example, a network routing topology can be optimised with blockchain.

The scope of the invention is indicated by the appended claims rather than by the description and figures herein.

## Claims

1. A method for selecting a network routing topology in a distributed network comprising multiple nodes, the method comprising, at respective ones of the multiple nodes:
receiving candidate transactions (100);
supplementing a database (110) with the candidate transactions;
selecting a network routing topology (130); and
**characterized by**:
the candidate transactions representing a set of candidate network routing topologies,
receiving respective voting transactions (120) from each of the other nodes, each representing an indication of a preferred candidate network routing topology, and
selecting the network routing topology from the set of candidate network routing topologies on the basis of the voting transactions.

2. A method as claimed in claim 1, further comprising:
generating a voting transaction referencing a candidate transaction proposing a candidate network routing topology.

3. A method as claimed in claim 1 or 2, further comprising deploying the selected network routing topology for a predetermined period of time.

4. A method as claimed in claim 1 or 2, further comprising deploying the selected network routing topology until a threshold value for a number of network changes is reached.

5. A method as claimed in any preceding claim, wherein a candidate network routing topology comprises a routing table generated using one or more predefined routing criteria.

6. A method as claimed in any preceding claim, further comprising:
rewarding delivery of messages on the network which are compliant with the selected network topology.

7. A method as claimed in any preceding claim, wherein the multiple nodes are a subset of a larger number of network nodes, the remainder of which are configured to deploy a selected network routing topology.

8. A method as claimed in any preceding claim, wherein the database is a distributed database.

9. A distributed network comprising multiple nodes according to claim 10.

10. A node in a distributed network, the node configured to:
receive candidate transactions (100);
supplement a database (110) with the candidate transactions;
select a network routing topology (130); and
**characterized by**:
the candidate transactions representing a set of candidate network routing topologies,
receive respective voting transactions (120) from multiple other nodes, each representing an indication of a preferred candidate network routing topology, and
select the network routing topology from the set of candidate network routing topologies on the basis of the voting transactions.

11. A node as claimed in claim 10, wherein the node is configured to generate a voting transaction referencing a candidate transaction proposing a candidate network routing topology.

12. A machine-readable storage medium encoded with instructions for selecting a network routing topology in a distributed network comprising multiple nodes, the instructions executable by a processor of a node to cause the node to:
receive candidate transactions (100);
supplement a database (110) with the candidate transactions;
select a network routing topology (130); and
**characterized by**:
the candidate transactions representing a set of candidate network routing topologies,
receive respective voting transactions (120) from multiple other nodes, each representing an indication of a preferred candidate network routing topology, and
select the network routing topology from the set of candidate network routing topologies on the basis of the voting transactions.

## Patentansprüche

1. Verfahren zum Auswählen einer Netzwerkroutingtopologie in einem verteilten Netzwerk, das mehrere Knoten umfasst, wobei das Verfahren an jeweiligen der mehreren Knoten Folgendes umfasst:
Empfangen von Transaktionskandidaten (100);
Ergänzen einer Datenbank (110) mit den Transaktionskandidaten;
Auswählen einer Netzwerkroutingtopologie (130) und
**gekennzeichnet durch**:
Repräsentieren eines Satzes von Netzwerkroutingtopologiekandidaten durch die Transaktionskandidaten,
Empfangen von jeweiligen Abstimmungstransaktionen (120) von jedem der anderen Knoten, von denen jede eine Anzeige eines bevorzugten Netzwerkroutingtopologiekandidaten anzeigt, und
Auswählen der Netzwerkroutingtopologie aus dem Satz von Netzwerkroutingtopologiekandidaten auf Basis der Abstimmungstransaktionen.

2. Verfahren nach Anspruch 1, das ferner Folgendes umfasst:
Erzeugen einer Abstimmungstransaktion, die einen Transaktionskandidaten referenziert, der einen Netzwerkroutingtopologiekandidaten vorschlägt.

3. Verfahren nach Anspruch 1 oder 2, das ferner das Einsetzen der ausgewählten Netzwerkroutingtopologie für eine vorbestimmte Zeitperiode umfasst.

4. Verfahren nach Anspruch 1 oder 2, das ferner das Einsetzen der ausgewählten Netzwerkroutingtopologie, bis ein Schwellwert für eine Anzahl von Netzwerkänderungen erreicht ist, umfasst.

5. Verfahren nach einem der vorhergehenden Ansprüche, wobei ein Netzwerkroutingtopologiekandidat eine Routingtabelle umfasst, die unter Verwendung von einem oder mehreren vordefinierten Routingkriterien erzeugt wird.

6. Verfahren nach einem der vorhergehenden Ansprüche, das ferner Folgendes umfasst:
Belohnen der Zustellung von Nachrichten im Netzwerk, die mit der ausgewählten Netzwerktopologie kompatibel sind.

7. Verfahren nach einem der vorhergehenden Ansprüche, wobei die mehreren Knoten ein Untersatz einer größeren Anzahl von Netzwerkknoten sind, deren Rest dazu ausgelegt sind, eine ausgewählte Netzwerkroutingtopologie einzusetzen.

8. Verfahren nach einem der vorhergehenden Ansprüche, wobei die Datenbank eine verteilte Datenbank ist.

9. Verteiltes Netzwerk, das mehrere Knoten gemäß Anspruch 10 umfasst.

10. Knoten in einem verteilten Netzwerk, wobei der Knoten zu Folgendem ausgelegt ist:
Empfangen von Transaktionskandidaten (100);
Ergänzen einer Datenbank (110) mit den Transaktionskandidaten;
Auswählen einer Netzwerkroutingtopologie (130); und
**gekennzeichnet durch**:
Repräsentieren eines Satzes von Netzwerkroutingtopologiekandidaten durch die Transaktionskandidaten,
Empfangen von jeweiligen Abstimmungstransaktionen (120) von mehreren anderen Knoten, von denen jede eine Anzeige eines bevorzugten Netzwerkroutingtopologiekandidaten anzeigt, und
Auswählen der Netzwerkroutingtopologie aus dem Satz von Netzwerkroutingtopologiekandidaten auf Basis der Abstimmungstransaktionen.

11. Knoten nach Anspruch 10, wobei der Knoten dazu ausgelegt ist, eine Abstimmungstransaktion, die einen Transaktionskandidaten referenziert, der einen Netzwerkroutingtopologiekandidaten vorschlägt, zu erzeugen.

12. Maschinenlesbares Speichermedium, auf dem Anweisungen zum Auswählen einer Netzwerkroutingtopologie in einem verteilten Netzwerk, das mehrere Knoten umfasst, codiert sind, wobei die Anweisungen von einem Prozessor eines Knotens ausführbar sind, um den Knoten zu Folgendem zu veranlassen:
Empfangen von Transaktionskandidaten (100);
Ergänzen einer Datenbank (110) mit den Transaktionskandidaten;
Auswählen einer Netzwerkroutingtopologie (130); und
**gekennzeichnet durch**:
Repräsentieren eines Satzes von Netzwerkroutingtopologiekandidaten durch die Transaktionskandidaten,
Empfangen von jeweiligen Abstimmungstransaktionen (120) von mehreren anderen Knoten, von denen jede eine Anzeige eines bevorzugten Netzwerkroutingtopologiekandidaten anzeigt, und
Auswählen der Netzwerkroutingtopologie aus dem Satz von Netzwerkroutingtopologiekandidaten auf Basis der Abstimmungstransaktionen.

## Revendications

1. Procédé pour sélectionner une topologie de routage de réseau dans un réseau distribué comprenant de multiples nœuds, le procédé comprenant, au niveau de nœuds respectifs des multiples nœuds :
la réception de transactions candidates (100) ;
le fait de compléter une base de données (110) avec les transactions candidates ;
la sélection d'une topologie de routage de réseau (130) ; et
**caractérisé par** :
les transactions candidates représentant un ensemble de topologies de routage de réseau candidates,
la réception de transactions de vote respectives (120) en provenance de chacun des autres nœuds, chacune représentant une indication d'une topologie de routage de réseau candidate préférée, et
la sélection de la topologie de routage de réseau parmi l'ensemble de topologies de routage de réseau candidates sur la base des transactions de vote.

2. Procédé selon la revendication 1, comprenant en outre :
la génération d'une transaction de vote référençant une transaction candidate proposant une topologie de routage de réseau candidate.

3. Procédé selon la revendication 1 ou 2, comprenant en outre le déploiement de la topologie de routage de réseau sélectionnée pendant une période de temps prédéterminée.

4. Procédé selon la revendication 1 ou 2, comprenant en outre le déploiement de la topologie de routage de réseau sélectionnée jusqu'à ce qu'une valeur de seuil pour un nombre de changements de réseau soit atteinte.

5. Procédé selon une quelconque revendication précédente, dans lequel une topologie de routage de réseau candidate comprend une table de routage générée en utilisant un ou plusieurs critères de routage prédéfinis.

6. Procédé selon une quelconque revendication précédente, comprenant en outre :
le fait de récompenser la remise de messages sur le réseau qui sont conformes à la topologie de réseau sélectionnée.

7. Procédé selon une quelconque revendication précédente, dans lequel les multiples nœuds sont un sous-ensemble d'un plus grand nombre de nœuds de réseau, dont le reste est configuré pour déployer une topologie de routage de réseau sélectionnée.

8. Procédé selon une quelconque revendication précédente, dans lequel la base de données est une base de données distribuée.

9. Réseau distribué comprenant de multiples nœuds selon la revendication 10.

10. Nœud dans un réseau distribué, le nœud configuré pour :
recevoir des transactions candidates (100) ;
compléter une base de données (110) avec les transactions candidates ;
sélectionner une topologie de routage de réseau (130) ; et
**caractérisé par** :
les transactions candidates représentant un ensemble de topologies de routage de réseau candidates,
recevoir des transactions de vote respectives (120) en provenance de multiples autres nœuds, chacune représentant une indication d'une topologie de routage de réseau candidate préférée, et
sélectionner la topologie de routage de réseau parmi l'ensemble de topologies de routage de réseau candidates sur la base des transactions de vote.

11. Nœud selon la revendication 10, dans lequel le nœud est configuré pour générer une transaction de vote référençant une transaction candidate proposant une topologie de routage de réseau candidate.

12. Support de stockage lisible par machine encodé avec des instructions pour sélectionner une topologie de routage de réseau dans un réseau distribué comprenant de multiples nœuds, les instructions exécutables par un processeur d'un nœud pour amener le nœud à :
recevoir des transactions candidates (100) ;
compléter une base de données (110) avec les transactions candidates ;
sélectionner une topologie de routage de réseau (130) ; et
**caractérisé par** :
les transactions candidates représentant un ensemble de topologies de routage de réseau candidates,
recevoir des transactions de vote respectives (120) en provenance de multiples autres nœuds, chacune représentant une indication d'une topologie de routage de réseau candidate préférée, et
sélectionner la topologie de routage de réseau parmi l'ensemble de topologies de routage de réseau candidates sur la base des transactions de vote.
